# FASCICULE DE BREVET EUROPEEN

(11) **EP 1 046 424 B1**
(45) Date de publication et mention de la délivrance du brevet: **31.05.2006**
(21) Numéro de dépôt: 00400911.4
(22) Date de dépôt: 03.04.2000
(51) Int. Cl.: B01J 37/20, C10G 45/08

(54) **Procédé de sulfuration de catalyseurs d'hydrotraitement**
Verfahren zur Sulfidierung von Wasserstoffbehandlungskatalysatoren
Process for sulphurising hydrotreating catalysts

(30) Priorité: 20.04.1999 FR 9904967
(43) Date de publication de la demande: 25.10.2000
(73) Titulaire: Arkema, 92800 Puteaux (FR)
(72) Inventeur: Brun, Claude, 64320 Idron (FR); Cholley, Thierry, 69003 Lyon (FR); Fremy, Georges, 64390 Sauveterre de Beran (FR)
(74) Mandataire: Treuil, Claude

(56) Documents cités:
- EP-A- 0 466 568
- EP-A- 0 842 701

## Description

La présente invention concerne le domaine de l'hydrotraitement de charges hydrocarbonées et a plus particulièrement pour objet un procédé de sulfuration des catalyseurs utilisés à cet effet.

Les catalyseurs d'hydrotraitement de charges hydrocarbonées, concernés par la présente invention, sont utilisés dans des conditions appropriées pour convertir les composés organosoufrés en présence d'hydrogène en hydrogène sulfuré, opération que l'on appelle hydrodésulfuration (HDS), et pour convertir les composés organoazotés en ammoniac dans une opération que l'on appelle hydrodéazotation (HDN).

Ces catalyseurs sont généralement à base de métaux des groupes VI B et VIII de la classification périodique des éléments, tels que le molybdène, le tungstène, le nickel et le cobalt. Les catalyseurs d'hydrotraitement les plus courants sont formulés à partir des systèmes cobalt-molybdène (Co-Mo), nickel-molybdène (Ni-Mo) et nickel-tungstène (Ni-W), sur des supports minéraux poreux tels que des alumines, des silices, des silices-alumines. Ces catalyseurs fabriqués industriellement à des tonnages très importants sont fournis à l'utilisateur sous leurs formes oxydes (par exemple les catalyseurs oxydes de cobalt-oxyde de molybdène sur alumine symbolisés par l'abréviation : Co-Mo/alumine).

Cependant, ces catalyseurs ne sont actifs dans les opérations d'hydrotraitement que sous forme de sulfures métalliques. C'est pourquoi, avant d'être utilisés, ils doivent être sulfurés.

Concernant l'activation des catalyseurs d'hydrotraitement, la sulfuration de ces catalyseurs est une étape importante pour obtenir le maximum de leurs performances en HDS et en HDN. Comme l'indiquent les auteurs de Hydrotreating Catalysis (Catalysis, vol. 11, 1996, p. 25, edite par J.R. Anderson et M. Boudart), l'expérience pratique a montré que la procédure de sulfuration peut avoir une influence significative sur l'activité et la stabilité du catalyseur, et beaucoup d'efforts ont été consacrés à améliorer les procédures de sulfuration

La méthode de sulfuration d'un catalyseur la plus directe consiste à traiter ce dernier par l'hydrogène sulfuré mélange à de l'hydrogène. Cette méthode qui a fait l'objet de plusieurs brevets (US 3 016 347, US 3 140 994, GB 1 309 457, US 3 732 155, US 4 098 682, US 4 132 632, US 4 172 027, US 4 176 087, US 4334982, FR 2 476 118) n'est généralement pratiquée qu'au stade du laboratoire car l'utilisation de l'hydrogène sulfure présente des inconvénients majeurs ne permettant pas sa mise en oeuvre sur tous les sites industriels.

Les procédures industrielles de sulfuration des catalyseurs sont généralement effectuées sous pression d'hydrogène avec des charges liquides contenant déjà des composés soufrés comme agents sulfurants. La méthode principalement utilisée dans le passé par les raffineurs consistait à sulfurer les catalyseurs avec les charges pétrolières soufrées, mais cette technique présentait des inconvénients importants à cause de la difficulté de transformer les composés soufrés en hydrogène sulfuré. Pour éviter la réduction des catalyseurs par l'hydrogène, les sulfurations, démarrées à basse température, devaient être menées lentement pour obtenir une sulfuration complète des catalyseurs à température élevée.

Des additifs soufrés ont été proposés pour améliorer la sulfuration des catalyseurs. La méthode consiste à incorporer un composé sulfuré (spiking agent) à une charge telle qu'un naphta ou à une coupe particulière telle qu'un VGO (vacuum gas oil) ou un LGO (light gas oil). Le brevet US 3 140 994 a été le premier à revendiquer l'emploi de composés, liquides à température ambiante, de différentes natures : sulfure de carbone, thiophène, mercaptans, dialkyldisulfures, diaryldisulfures. Les sulfures organiques, en particulier le diméthylsulfure, ont aussi fait l'objet de revendications. Le diméthyldisulfure (DMDS) a été plus particulièrement préconisé pour la sulfuration des catalyseurs et une méthode performante de sulfuration avec le diméthyldisulfure est décrite dans le brevet EP 64429.

H. Hallie (Oil and Gas Journal, Dec. 20, 1982, pp 69 - 74) a fait le point sur ces procédures de sulfuration sous hydrogène qui sont effectuées directement dans les réacteurs d'hydrotraitement. Ces différentes techniques de sulfuration de catalyseurs, dites "in-situ", ont été comparées et les travaux ont montré que la sulfuration avec une charge liquide additionnée d'un agent sulfurant (spiked feedstock) ayant la propriété de se décomposer à basse température est la meilleure technique de sulfuration. La technique sans agent sulfurant additionnel (nonspiked feedstock) donne un catalyseur sulfuré moins actif. L'agent sulfurant qu'on préfère additionner à la charge est le diméthyldisulfure.

Des polysulfures organiques ont aussi été revendiqués comme agents sulfurants pour la sulfuration des catalyseurs. Le brevet US 4 725 569 décrit une méthode d'utilisation des polysulfures organiques de type RSₓR' (R et R' pouvant être identiques ou différents, avec x égal ou supérieur à 3) qui consiste à imprégner à température ambiante le catalyseur par une solution contenant le polysulfure, à éliminer ensuite le solvant inerte, et enfin à effectuer la sulfuration sous hydrogène du catalyseur chargé dans le réacteur d'hydrotraitement. Dans le brevet EP 298 111, le polysulfure de type RSₓR', dilué dans une charge liquide, est injecté pendant la sulfuration du catalyseur en présence d'hydrogène.

Des mercaptans fonctionnalisés, tels que acides ou esters mercaptocarboxyliques, dithiols, aminomercaptans, hydroxymercaptans, de même que des acides ou esters thiocarboxyliques, sont revendiqués dans le brevet EP 289211 pour la sulfuration des catalyseurs.

Plus récemment, on a développé de nouvelles techniques de sulfuration des catalyseurs comprenant deux étapes. Dans une première étape, dite "ex-situ", le catalyseur est préactivé en l'absence d'hydrogène à l'extérieur de la raffinerie après avoir été imprégné d'un agent sulfurant. La sulfuration complète du catalyseur est effectuée dans le réacteur d'hydrotraitement en présence d'hydrogène. La présulfuration "ex-situ" dispense le raffineur d'injecter un agent sulfurant au cours de la sulfuration du catalyseur sous hydrogène. Les techniques "ex-situ" actuellement développées utilisent comme produits soufrés des polysulfures organiques ou du soufre.

Une technique industrielle de présulfuration de catalyseurs en "ex-situ", basée sur l'utilisation de polysulfures organiques du type RSₓR' (R et R' pouvant être identiques ou différents et x ≥ 3), a fait l'objet du brevet EP 130 850. Ce procédé consiste à imprégner le catalyseur sous forme oxyde par une solution de polysulfures organiques, tels que les tertiononylpolysulfures (TPS 37 ou TNPS commercialisés par ELF ATOCHEM), dans un hydrocarbure du type white-spirit. Cette étape préliminaire d'incorporation au catalyseur d'un composé soufré de nature particulière est complétée par un traitement thermique du catalyseur en l'absence d'hydrogène à des températures ne dépassant pas 150 °C. Cette opération a pour effet d'éliminer le solvant organique et d'assurer la fixation du soufre au catalyseur par l'intermédiaire des polysulfures organiques. A ce stade de présulfuration, le catalyseur est stable à l'air et peut être manipulé sans précaution particulière. Il est fourni dans cet état à l'utilisateur qui, après chargement dans le réacteur d'hydrotraitement, peut achever la sulfuration du catalyseur sous hydrogène pour la transformation totale des métaux en sulfures métalliques.

D'autres composés organiques polysulfurés, de différentes structures, ont été aussi revendiqués pour la présulfuration des catalyseurs en "ex-situ". Les produits préconisés dans les brevets FR 2 627 104 et EP 329 499 ont pour formule générale : R'-(S_{y}-R-Sₓ-R-S_{y})-R' et sont obtenus à partir d'oléfines et de chlorure de soufre par une série d'étapes successives qui font intervenir une réaction avec un monohalogénure organique suivie d'une réaction avec un polysulfure alcalin. Dans le brevet EP 338 897, les produits revendiqués sont synthétisés à partir d'oléfines et de chlorure de soufre avec une réaction complémentaire avec un mercaptide alcalin ou un mercaptate polysulfure alcalin.

Le développement d'une technique de présulfuration "ex-situ" des catalyseurs utilisant du soufre en suspension dans une huile (US 4 943 547) a posé de tels problèmes d'application industrielle qu'il a fallu mettre au point un nouveau procédé de sulfuration au soufre qui consiste à mettre le catalyseur en contact avec du soufre et une oléfine de point d'ébullition élevé. Le catalyseur ainsi imprégné est ensuite traité thermiquement à une température supérieure à 150 °C, puis la sulfuration du catalyseur est achevée sous hydrogène à des températures supérieures à 200°C.

Très récemment, dans le brevet FR 2 758 478, il a été indiqué que l'utilisation conjointe d'un mercaptan tertiaire et d'un autre agent de sulfuration, tel que le diméthyldisulfure par exemple, permet d'obtenir des catalyseurs d'hydrotraitement plus actifs en hydrodésulfuration de charges hydrocarbonées que des catalyseurs sulfurés en l'absence de mercaptan tertiaire.

La présente invention a pour but d'apporter des améliorations dans la sulfuration des catalyseurs et d'accroître l'activité des catalyseurs, en particulier pour l'hydrotraitement des charges hydrocarbonées.

Il a maintenant été trouvé, d'une manière surprenante, que l'utilisation conjointe d'un agent de sulfuration et d'un ester de l'acide orthophtalique permet d'obtenir des catalyseurs plus actifs en hydrodésulfuration de charges hydrocarbonées que les catalyseurs sulfurés en l'absence de cet ester d'acide orthophtalique.

Ainsi, la présente invention concerne un procédé de sulfuration de catalyseurs à base d'oxyde(s) métallique(s) comprenant une étape de traitement du catalyseur par un agent de sulfuration, caractérisé en ce que l'on ajoute à ce dernier un ester d'acide orthophtalique

La présente invention s'applique aussi bien aux techniques de sulfuration des catalyseurs en "in-situ" qu'à celles opérant en "ex-situ".

Dans les sulfurations "in-situ", les composés soufrés sont introduits pendant le traitement des catalyseurs en présence d'hydrogène pour la transformation des oxydes métalliques en sulfures métalliques. Selon la présente invention, l'ester de l'acide orthophtalique est introduit en même temps que les composés soufrés qui sont généralement utilisés pour générer, en présence d'hydrogène, l'hydrogène sulfuré qui assure la transformation des oxydes métalliques en sulfures métalliques.

Dans les présulfurations "ex-situ", les composés soufrés sont incorporés aux catalyseurs avant leur traitement pour la transformation des oxydes métalliques en sulfures métalliques. Selon la présente invention, l'ester d'acide orthophtalique peut être incorporé en mélange avec le composé soufré.

Les esters d'acide orthophtalique selon la présente invention répondent à la formule générale suivante : 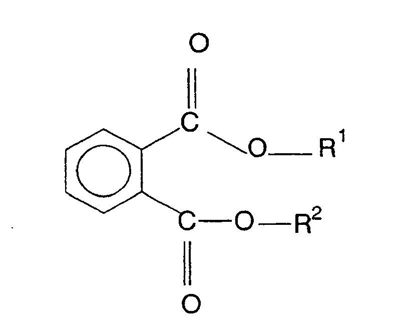 dans laquelle les symboles R¹ et R², identiques ou différents, représentent chacun un radical alkyle (linéaire ou ramifié), cycloalkyle, aryle, alkylaryle ou arylalkyle, ce radical pouvant contenir 1 à 18 atomes de carbone et éventuellement un ou plusieurs hétéroatomes.

Les esters d'acide orthophtalique préférés selon l'invention sont ceux dans lesquels les symboles R¹ et R² représentent des radicaux alkyle identiques contenant de 1 à 8 atomes de carbone et, plus particulièrement, l'orthophtalate de diméthyle, l'orthophtalate de diéthyle et l'orthophtalate de bis (2-éthylhexyle) en raison de leur accessibilité industrielle et de leur coût modéré.

Les agents de sulfuration considérés dans la présente invention peuvent être tout agent de sulfuration connu de l'homme de l'art tel que la charge à hydrodésulfurer elle-même, le sulfure de carbone, les sulfures, disulfures ou polysulfures organiques comme les ditertiononylpolysulfures et les ditertiobutylpolysulfures, les composés thiophéniques ou les oléfines soufrées obtenues par chauffage d'oléfines avec du soufre.

La proportion d'ester d'acide orthophtalique qui peut être utilisée en mélange avec des composés soufrés de différentes natures est de 0,05 % à 5 % en poids. De préférence, la proportion utilisée sera de 0,1 à 0,5 % (1000 à 5000 ppm).

Les exemples suivants illustrent l'invention sans la limiter.

### EXEMPLE 1 comparatif (Sulfuration au diméthyldisulfure)

Le test a été réalisé sur un pilote de type CATATEST, avec 75 ml d'un catalyseur commercial d'hydrodésulfuration, constitué d'oxydes de cobalt et de molybdène supportés sur alumine.

Comme charge de sulfuration, on a utilisé un gazole issu de la distillation atmosphérique du pétrole brut (Gas Oil Straight Run ; ci-après GOSR) additivé de 2 % en poids de diméthyldisulfure.

La sulfuration a été conduite sous une pression de 35 bars, une vitesse volumique horaire (VVH) de 2 h⁻¹ et un ratio H₂/hydrocarbure (HC) de 250 Nl/I de la façon suivante:
- montée en température de 150°C à 220°C à raison de 30°C/h sous charge de sulfuration;
- suivi en continu de la teneur en H₂S dans les gaz sortants du réacteur ;
- palier de température à 220°C maintenu jusqu'à l'obtention de 0,3 % en volume d'H₂S dans les gaz ;
- montée en température à 350°C à raison de 30°C/h ;
- palier de 14 heures à 350°C ;
- arrêt de la charge de sulfuration et basculement sur charge de test.

L'activité du catalyseur sulfuré a été évaluée avec une charge de test constituée également par un gazole issu de la distillation atmosphérique du pétrole brut, mais sans additif.

Les caractéristiques de la charge de test (GOSR) sont rassemblées dans le tableau 1 suivant :

**Tableau 1**

| **Type de charge** | | | **GOSR** |
|---|---|---|---|
| Densité 15°C | | g/cm³ | 0,8741 |
| Azote | | ppm | 239 |
| Soufre | | % pds | 1,1 |
| ASTM D86 | | | |
| | PI | °C | 227,3 |
| | 5 % vol. | °C | 274,5 |
| | 10 % vol. | °C | 292,0 |
| | 30 % vol. | °C | 315,5 |
| | 50 % vol. | °C | 332,0 |
| | 70 % vol. | °C | 348,0 |
| | 90 % vol. | °C | 367,0 |
| | 95 % vol. | °C | 373,0 |
| | P.F. | °C | 373,7 |

Après le palier de sulfuration à 350°C, la charge de test a été injectée en remplacement de la charge de sulfuration et la température a été portée à 360°C. les autres conditions (pression, rapport H₂/HC et VVH) restant identiques.

Après une phase de stabilisation, l'activité du catalyseur a été mesurée à 360°C et exprimée en terme d'activité volumique relative en hydrodésulfuration (RVA), cette RVA étant calculée de la manière suivante :
Après chaque activation au DMDS, additivé ou non, la constante d'activité en HDS (k) est calculée à partir de la teneur en soufre résiduelle dans la charge de test. La RVA est le rapport de cette constante d'activité avec celle du test de référence (catalyseur sulfuré au DMDS) exprimée en pourcentage, soit 100.k/k_{ref}. Ainsi, la RVA du catalyseur sulfuré au DMDS est de 100 %.

### EXEMPLE 2

La charge de sulfuration utilisée dans l'exemple 1, a été remplacée par le même gasole GOSR additivé avec 2 % d'un mélange constitué de DMDS contenant 2000 ppm d'orthophtalate de diéthyle (DEP). La RVA calculée à 360°C est reportée dans le tableau 2. Seule la température de 360°C est considérée car c'est celle qui permet d'obtenir une teneur résiduelle en soufre voisine de 500 ppm conforme à la spécification d'un gasoil.

### EXEMPLE 3

L'exemple 1, utilisant le DMDS seul comme agent de sulfuration, a été reproduit pour vérification. Le résultat est reporté dans le tableau 2.

### EXEMPLE 4

L'exemple 2, utilisant comme agent de sulfuration un DMDS contenant 2000 ppm de DEP, a été reproduit pour vérification. Le résultat est reporté dans le tableau 2.

### EXEMPLE 5

La charge de sulfuration selon l'exemple 1 a été remplacée par le gazole GOSR additivé avec 2 % de DMDS contenant 1000 ppm de DEP.

Le résultat est reporté dans le tableau 2.

**Tableau 2 : Résultats**

| **EXEMPLE** | **1** | **2** | **3** | **4** | **5** |
|---|---|---|---|---|---|
| Agent de sulfuration | DMDS seul | DMDS + 2000 ppm de DEP | DMDS seul | DMDS + 2000 ppm de DEP | DMDS + 1000 ppm de DEP |
| RVA à 360°C | 100 | 113 | 100 | 112 | 115 |

L'exemple 2 montre clairement que l'utilisation conjointe de DEP et de DMDS lors de la sulfuration conduit à un catalyseur significativement plus actif que celui de l'exemple 1 (sulfuration sans orthophtalate).

L'exemple 3 montre la bonne reproductibilité de la méthode.

Les exemples 4 et 5 confirment l'effet exhausteur d'activité hydrodésulfurante des phtalates et indiquent également la faible proportion utilisable pour obtenir cet effet.

## Revendications

1. Procédé de sulfuration d'un catalyseur métallique d'hydrotraitement comprenant une étape de traitement du catalyseur par un agent de sulfuration, **caractérisé en ce qu'**on ajoute à ce dernier un ester d'acide orthophtalique.

2. Procédé selon la revendication 1 dans lequel on utilise un ester d'acide orthophtalique de formule générale : 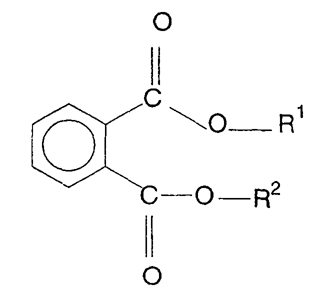 dans laquelle les symboles R¹ et R², identiques ou différents, représentent chacun un radical alkyle, cycloalkyle, aryle, alkylaryle ou arylalkyle, ce radical pouvant contenir 1 à 18 atomes de carbone et éventuellement un ou plusieurs hétéroatomes.

3. Procédé selon la revendication 1 dans lequel l'ester utilisé est un orthophtalate de dialkyle, les radicaux alkyle identiques contenant chacun de 1 à 8 atomes de carbone, de préférence l'orthophtalate de diméthyle, l'orthophtalate de diéthyle ou l'orthophtalate de bis(2-éthylhexyle).

4. Procédé selon l'une des revendications 1 à 3 dans lequel la quantité utilisée d'ester d'acide orthophtalique est de 0,05 à 5 % par rapport au poids d'agent de sulfuration et, de préférence, comprise entre 0,1 et 0,5 %.

5. Procédé selon l'une des revendications 1 à 4 dans lequel l'agent de sulfuration est une charge à hydrodésulfurer, le sulfure de carbone, un sulfure disulfure ou polysulfure organique, un composé thiophénique ou une oléfine soufrée.

6. Procédé selon la revendication 5 dans lequel l'agent de sulfuration est le diméthyldisulfure.

7. Procédé selon l'une des revendications 1 à 6 dans lequel on opère en présence d'hydrogène suivant la technique de sulfuration "in-situ".

8. Procédé selon l'une des revendications 1 à 6 dans lequel on opère d'abord en l'absence d'hydrogène suivant la technique de présulfuration "ex-situ".

9. Procédé selon l'une des revendications 1 à 8 dans lequel le catalyseur métallique à sulfurer est un catalyseur à base d'oxydes de molybdène, tungstène, nickel et/ou cobalt, déposés sur un support minéral poreux.

10. Procédé selon la revendication 9 dans lequel le catalyseur métallique à sulfurer est un mélange d'oxydes de cobalt et de molybdène, un mélange d'oxydes de nickel et de molybdène ou un mélange d'oxydes de nickel et de tungstène, ce mélange d'oxydes étant supporté par une alumine, une silice ou une silice-alumine.

11. Utilisation d'un catalyseur métallique, sulfuré par un procédé selon l'une des revendications 1 à 10, pour l'hydrotraitement de charges hydrocarbonées.

## Claims

1. Process for the sulphurization of a metal hydrotreating catalyst comprising a stage of treatment of the catalyst with a sulphurization agent, **characterized in that** an orthophthalic acid ester is added to the latter.

2. Process according to Claim 1, in which use is made of an orthophthalic ester of general formula: 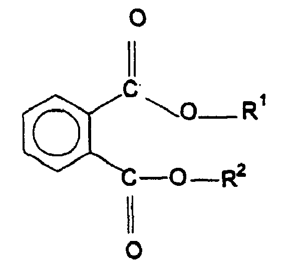 in which the R¹ and R² symbols, which are identical or different, each represent an alkyl, cycloalkyl, aryl, alkylaryl or arylalkyl radical, it being possible for this radical to comprise 1 to 18 carbon atoms and optionally one or more heteroatoms.

3. Process according to Claim 1, in which the ester used is a dialkyl orthophthalate, the identical alkyl radicals each comprising from 1 to 8 carbon atoms, preferably dimethyl orthophthalate, diethyl orthophthalate or bis(2-ethylhexyl) orthophthalate.

4. Process according to one of Claims 1 to 3, in which the amount of orthophthalic acid ester used is from 0.05 to 5% with respect to the weight of sulphurization agent and preferably between 0.1 and 0.5%.

5. Process according to one of Claims 1 to 4, in which the sulphurization agent is a feedstock to be hydrodesulphurized, carbon disulphide, an organic sulphide, disulphide or polysulphide, a thiophene compound or a sulphur-comprising olefin.

6. Process according to Claim 5, in which the sulphurization agent is dimethyl disulphide.

7. Process according to one of Claims 1 to 6, in which the processing is carried out in the presence of hydrogen according to the "in situ" sulphurization technique.

8. Process according to one of Claims 1 to 6, in which the processing is firstly carried out in the absence of hydrogen according to the "ex situ" presulphurization technique.

9. Process according to one of Claims 1 to 8, in which the metal catalyst to be sulphurized is a catalyst based on molybdenum, tungsten, nickel and/or cobalt oxides which are deposited on a porous inorganic support.

10. Process according to Claim 9, in which the metal catalyst to be sulphurized is a mixture of cobalt and molybdenum oxides, a mixture of nickel and molybdenum oxides or a mixture of nickel and tungsten oxides, this mixture of oxides being supported by an alumina, a silica or silica/alumina.

11. Use of a metal catalyst, sulphurized by a process according to one of Claims 1 to 10, in the hydrotreating of hydrocarbon feedstocks.

## Patentansprüche

1. Verfahren zur Sulfidierung eines metallischen Wasserstoffbehandlungskatalysators, umfassend einen Schritt zur Behandlung des Katalysators durch ein Sulfidierungsmittel, **dadurch gekennzeichnet, dass** letzterem ein Orthophtalsäureester beigefügt wird.

2. Verfahren nach Anspruch 1, wobei ein Orthophtalsäureester der allgemeinen Formel 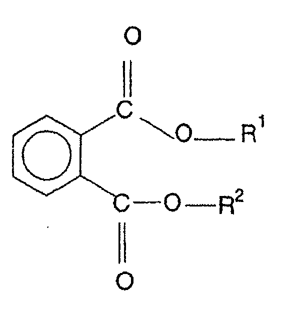 verwendet wird, wobei die Symbole R¹ und R², identisch oder verschieden, jeweils ein Alkylradikal, Cycloalkyl, Aryl, Alkylaryl oder Arylalkyl repräsentieren, wobei dieses Radikal 1 bis 18 Kohlenstoffatome und eventuell ein oder mehrere Heteroatome enthalten kann.

3. Verfahren nach Anspruch 1, wobei der Ester, der verwendet wird, ein Dialkylorthophtalat ist, die identischen Alkylradikale jeweils 1 bis 8 Kohlenstoffatome enthalten, vorzugsweise Dimethylorthophtalat, Diethylorthophtalat oder Bis(2-ethylhexyl)orthophtalat.

4. Verfahren nach einem der Ansprüche 1 bis 3, wobei die verwendete Menge an Orthophtalsäureester bei 0,05 bis 5 %, im Verhältnis zum Gewicht des Sulfidierungsmittels, und vorzugsweise zwischen 0,1 und 0,5% liegt.

5. Verfahren nach einem der Ansprüche 1 bis 4, wobei das Sulfidierungsmittel ein Grundstoff zur Hydrodesulfurierung, der Schwefelkohlenstoff, ein Sulfid, Disulfid oder organisches Polysulfid, eine Thiophenverbindung oder ein geschwefeltes Olefin ist.

6. Verfahren nach Anspruch 5, wobei das Sulfidierungsmittel ein Dimethylsulfid ist.

7. Verfahren nach einem der Ansprüche 1 bis 6, wobei in Gegenwart von Wasserstoff gemäß der Sulfidisierungstechnik "in situ" verfahren wird.

8. Verfahren nach einem der Ansprüche 1 bis 6, wobei zuerst in Abwesenheit von Wasserstoff gemäß der Vorsulfidierungstechnik "ex situ" verfahren wird.

9. Verfahren nach einem der Ansprüche 1 bis 8, wobei der metallische Katalysator, der zu sulfidieren ist, ein Katalysator auf der Basis von Molybdän-, Wolfram-, Nickel- und/oder Kobaltoxiden ist, die auf einem porösen Mineralträger deponiert sind.

10. Verfahren nach Anspruch 9, wobei der metallische Katalysator, der zu sulfidieren ist, eine Mischung aus Kobalt- und Molybdänoxiden, eine Mischung aus Nickel- und Molybdänoxiden oder eine Mischung aus Nickel- und Wolframoxiden ist, wobei diese Mischung aus Oxiden von einem Aluminiumoxid, einem Siliciumdioxid oder einem Siliciumdioxid-Aluminiumoxid getragen wird.

11. Verwenden eines metallischen Katalysators, der durch ein Verfahren nach einem der Ansprüche 1 bis 10 sulfidiert wurde, für die Wasserstoffbehandlung von Kohlenwasserstofflasten.
